(19) Europäisches Patentamt
European Patent Office
Office européen des brevets

(11) **EP 4 272 958 A1**

(12) **EUROPEAN PATENT APPLICATION**
published in accordance with Art. 153(4) EPC

(43) Date of publication:
**08.11.2023 Bulletin 2023/45**

(21) Application number: **22749477.0**

(22) Date of filing: **18.01.2022**

(51) International Patent Classification (IPC):
**B32B 27/00** (2006.01)   **B32B 27/36** (2006.01)
**B60R 13/00** (2006.01)   **B32B 7/025** (2019.01)

(52) Cooperative Patent Classification (CPC):
**B32B 7/025; B32B 27/00; B32B 27/36; B60R 13/00**

(86) International application number:
**PCT/JP2022/001656**

(87) International publication number:
**WO 2022/168601 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2021 JP 2021017450**

(71) Applicant: **Resonac Corporation
Tokyo 105-8518 (JP)**

(72) Inventor: **MITSUISHI, Naoko
Tagawa-shi, Fukuoka 825-0005 (JP)**

(74) Representative: **Hoffmann Eitle
Patent- und Rechtsanwälte PartmbB
Arabellastraße 30
81925 München (DE)**

(54) **LAYERED STRUCTURE FOR AUTOMOTIVE EMBLEM AND OBJECT-SENSING STRUCTURE**

(57)    A layered structure for an automobile emblem, includes: a first member containing a first resin material; a second member containing the first resin material and facing the first member; and a filling member containing a second resin material provided between the first member and the second member.

FIG. 1

EP 4 272 958 A1

**Description**

Technical Field

The present disclosure relates to a layered structure for an automobile emblem and an object detection structure.

Background Art

Japanese Patent Application Laid-Open (JP-A) No. 2003-019765 discloses a metallic coating film in which an undercoat film and a metal film are coated in this order on a substrate, and a clear coating film is coated on the metal film; and this metallic coating film is for use in automotive parts.

SUMMARY OF INVENTION

Meanwhile, automobiles in recent years have seen remarkable progress in safety equipment, and for example, the installation of automatic collision avoidance systems has become commonplace.
Such an automatic collision avoidance system automatically activates the brakes using image data from an on-board camera and information about relative distance to an object with a millimeter wave radar.
A millimeter wave radar transmitter/receiver, which constitutes the automatic collision avoidance system, is desirably placed at a front center of an automobile. Generally, an automobile emblem is placed at a front center of an automobile. Therefore, the millimeter wave radar transmitter/receiver is desirably placed on a rear side of the automobile emblem. For example, a metallic coating film described in JP-A 2003-019765 can be assumed to be used for automobile emblem.
However, when stacking multiple members such as in an automobile emblem, a gap may be provided between the members in consideration of variations in the thickness of each member. In this case, there is a risk that reflection of a millimeter wave may occur at an interface between an air phase in the gap and a member, and an amount of transmission attenuation may increase.
On the other hand, an insert molding method is conceivable as a technique for eliminating gaps between members. However, there is problem that the millimeter wave transmission performance, appearance or the like due to a damage to the metal film caused by high temperature and high pressure. Therefore, a structure that can withstand heat treatment is required, which complicates the layered structure.
In addition, the layered structure molded by insert molding is usually made of different resin materials for the inner member and the outer member (for example, an inner member made of polycarbonate, and an outer member made of acrylonitrile-ethylene-propylene -diene-styrene copolymer resin).
However, the inner member and the outer member, which are made of different resin materials, have different relative permittivity, and there is room for reduction in the transmission attenuation of millimeter wave in the layered structure.
The present disclosure has been made in view of the above circumstances, and aims to provide a layered structure for automobile emblem capable of reducing transmission attenuation of millimeter wave and an object detection structure including the same.

Solution to Problem

The specific measures for achieving the above aims are as follows.

<1> A layered structure for an automobile emblem, including:

a first member including a first resin material;
a second member including the first resin material and facing the first member; and
a filling member including a second resin material provided between the first member and the second member.

<2> The layered structure for an automobile emblem according to <1>, in which the first resin material is selected from the group consisting of a polycarbonate, an acrylonitrile-butadiene-styrene copolymer resin, a (meth)acrylic resin and an acrylonitrile-ethylene-propylene-diene-styrene copolymer resin.
<3> The layered structure for an automobile emblem according to <1> or <2>, in which the second resin material is selected from the group consisting of a synthetic rubber, an epoxy resin and a urethane resin.
<4> The layered structure for an automobile emblem according to any one of <1> to <3>, in which the first resin material is polycarbonate, and the second resin material is selected from the group consisting of ethylene-propylene-diene rubber, bisphenol A type epoxy resin and polyol-based urethane resin.

<5> The layered structure for an automobile emblem according to any one of <1> to <4>, in which a thickness of the filling member is from 0.1 mm to 3.0 mm.

<6> The layered structure for an automobile emblem according to any one of <1> to <5>, in which each content of the first resin material in the first member and in the second member is independently 60% by mass or more.

<7> The layered structure for an automobile emblem according to any one of <1> to <6>, in which a content of the second resin material in the filling member is 60% by mass or more.

<8> The layered structure for an automobile emblem according to any one of <1> to <7>, further including a design layer between the first member and the filling member or between the second member and the filling member.

<9> The layered structure for an automobile emblem according to any one of <1> to <8>, in which the first member or the second member includes a coloring agent.

<10> An object detection structure including:

the layered structure for an automobile emblem according to any one of <1> to <9>; and

a millimeter wave radar that emits a millimeter wave toward the layered structure for an automobile emblem.

Advantageous Effects of Invention

According to one embodiment in the present disclosure, it is possible to provide a layered structure for automobile emblem capable of reducing transmission attenuation of millimeter wave and an object detection structure including the same.

BRIEF DESCRIPTION OF DRAWINGS

FIG. 1 is a schematic configuration diagram showing an example of a layered structure for automobile emblem in the present disclosure.

FIG. 2 is a schematic configuration diagram showing another example of a layered structure for automobile emblem in the present disclosure.

DESCRIPTION OF EMBODIMENTS

A detailed description will be given below of embodiments for implementing the present disclosure. However, the present disclosure is not limited to the following embodiments. In the following embodiments, the constituent elements (including element steps and the like) are not essential unless otherwise specified. The same applies to numerical values and their ranges, which do not limit the present disclosure.

In the present disclosure, the numerical range indicated using "to" includes the numerical values before and after "to" as the minimum and maximum values, respectively.

In the present disclosure, in the numerical ranges described step by step in the present disclosure, the upper limit or lower limit of one numerical range may be replaced with the upper or lower limit of another numerical range described step by step.. Moreover, in the numerical ranges described in the present disclosure, the upper or lower limits of the numerical ranges may be replaced with the values shown in the examples.

In the present disclosure, each component may contain multiple types of applicable substances. In a case in which there are multiple types of substances corresponding to each component in the composition, an amount or a content of each component means a total amount or content of the multiple types of substances present in the composition unless otherwise specified.

In the present disclosure, the particles corresponding to each component may contain multiple types of particles.

In the present disclosure, the term "layer" or "film" encompasses the case where the layer or film is formed in the entire region and the case where the layer or film is formed in only a part of the region, when observing the region where the layer or film is present.

In the present disclosure, a thickness of each layer refers to the arithmetic mean value obtained by preparing a test piece from the object to be measured using a microtome or the like and measuring a thickness at any five points with an electron microscope.

In the present disclosure, "(meth)acrylic" is a term used with a concept that includes both acrylic and methacrylic.

<Layered structure for automobile emblem>

A layered structure for automobile emblem in the present disclosure includes: a first member containing a first resin material; a second member containing the first resin material and facing the first member; and a filler member containing a second resin material provided between the first member and the second member.

The layered structure for automobile emblem in the present disclosure can reduce transmission attenuation of millimeter wave. The reason for this is presumed as follows.

In the layered structure for automobile emblem whose multiple members are laminated, reflection of millimeter waves occurs at each interface, whereby an amount of transmission of millimeter waves decreases and an amount of transmission attenuation increases.

In the layered structure for automobile emblem in the present disclosure, the first member and the second member both contain the first resin material, whereby an amount of transmission attenuation that occurs at an interface between the first member and the filling member and an amount of transmission attenuation that occurs at an interface between the second member and the filler member are comparable.

Therefore, it is possible to select the material constituting the filling member from materials that can reduce the amount of transmission attenuation occurring at the interface between the first member and the second member (for example, a material that reduces the difference in relative permittivity between the first member / the second member and the filling member), and it is presumed that the layered structure for automobile emblem can reduce the transmission attenuation of millimeter wave.

The layered structure for automobile emblem in the present disclosure tends to be useful for reducing transmission attenuation for millimeter waves with frequencies of from 20 GHz to 300 GHz, for example.

The term "millimeter wave" described in this disclosure means the above frequency band.

In each of the above-mentioned members, a difference between a value of a relative permittivity of a member with the maximum relative permittivity and a value of a relative permittivity of a member with the minimum relative permittivity is preferably 1.0 or less, more preferably 0.5 or less, and still more preferably 0.3 or less, from the viewpoint of effective reduction of an amount of transmission attenuation of millimeter wave.

A lower limit of the aforementioned difference is not particularly limited.

In the present disclosure, the permittivities of the first member, the second member and the filling member all mean values at 77 GHz.

In a case in which a layered structure for an automobile emblem in the present disclosure is applied to an automobile emblem, either the first member or the second member may be placed inside.

In one embodiment, the layered structure in the present disclosure may be produced by stacking a first member and a second member, and filling a gap between these members with an adhesive agent containing a second resin material. The adhesive agent may be a one-component curing adhesive agent or a two-component curing adhesive agent.

In another embodiment, the layered structure in the present disclosure may be produced by stacking a first member, a planar resin sheet containing a second resin material, and a second member, and applying pressure (if necessary, and heating).

Further, a design layer, an undercoat layer, a topcoat layer or the like, which will be described later, may be formed on a surface of the first member or the second member.

Each member constituting the layered structure for automobile emblem in the present disclosure will be described below.

(First member)

The first member includes a first resin material.

Examples of the first resin material include a thermosetting resin and a thermoplastic resin.

Examples of the thermoplastic resin include a polyethylene, a polypropylene, a polycarbonate (PC), a polystyrene, a polyvinyl chloride, a vinyl-based polymer, a polyester, a polyamide, an acrylonitrile-butadiene-styrene copolymer resin (ABS resin), a (meth)acrylic resin, an acrylonitrile-ethylene-propylene-diene-styrene copolymer resin (AES resin), a thermoplastic elastomer. Among them, the thermoplastic resin is preferably at least one resin selected from the group consisting of a polycarbonate, an ABS resin, a (meth)acrylic resin and an AES resin.

The (meth)acrylic resin preferably contains a polymethyl methacrylate (PMMA) resin.

Examples of the thermosetting resin include a silicone resin, a urethane resin, a melamine resin, an epoxy resin, a phenol resin, and a urea resin.

The first resin material is preferably selected from the group consisting of a PC, a ABS resin, a (meth)acrylic resin and a AES resin, and particularly preferably a PC.

Polypropylene has a light specific gravity, is easy to process, has high tensile strength, impact strength and compression strength, and is also excellent in weather resistance and heat resistance, among resin materials.

An ABS resin is relatively easy to apply surface treatment, and therefore, it is easy to apply coating after molding, is excellent in chemical resistance and rigidity, and is also excellent in impact resistance, heat resistance and cold resistance, among plastic materials.

A PC has high impact resistance, excellent weather resistance and heat resistance, and excellent transparency, among plastic materials. In addition, polycarbonate is easy to process, relatively light among plastic materials, and is a durable material.

From the viewpoint of reducing the amount of transmission attenuation, a content of the first resin material in the first member is preferably 60% by mass or more, more preferably 70% by mass or more, and still more preferably 80% by mass or more, and particularly preferably 90% by mass or more.

Also, the content of the first resin material in the first member may be 100% by mass or less.

The first member may contain a resin material other than the first resin material (another resin material) as long as the properties of the layered structure in the present disclosure are not impaired.

The second member may or may not contain another resin material.

As another resin material, the resin materials described above as the first resin material can be used.

From the viewpoint of reducing the amount of transmission attenuation, a content of the other resin material in the first member is preferably 5% by mass or less, preferably 3% by mass or less, and preferably 1% by mass or less, and particularly preferably 0% by mass.

In the present disclosure, in a case in which the members inevitably contain other resin materials, it corresponds to 0% by mass.

The first member may contain additives such as an inorganic particle, a coloring agent, and an antistatic agent within a range that does not impair the properties of the layered structure in the present disclosure.

In a case in which the layered structure for automobile emblem in the present disclosure is applied to the emblem so that the first member is at inner side, the first member preferably contains a coloring agent. In a case in which the layered structure for automobile emblem in the present disclosure is applied to the emblem so that the second member is at inner side, the second member preferably contains a coloring agent.

In a case in which the first member or the second member disposed at inner side contains a coloring agent, it is possible to shield the color (metallic or the like) of the member to which the emblem is applied, and it tend to be able to improve the designability of the design layer described later.

Examples of the coloring agent include carbon black and triiron tetroxide.

A content of the coloring agent in the first member or the second member is preferably from 2% by mass to 8% by mass, and more preferably from 3% by mass to 5% by mass.

A relative permittivity of the first member may be from 2.5 to 3.3, from 2.5 to 2.9, or from 2.5 to 2.8.

A dielectric loss tangent of the first member is preferably 0.010 or less from the viewpoint of transmission of radio waves such as millimeter waves. The lower limit of the dielectric loss tangent is not particularly limited.

From the viewpoint of appearance, a thickness of the first member is preferably from 1.5 mm to 6 mm, and more preferably from 1.8 mm to 4.5 mm.

(Second member)

The layered structure for automobile emblem in the present disclosure includes a second member facing the first member. The second member includes the first resin material, and the description of the first resin material is omitted here because it has been described above.

From the viewpoint of reducing the amount of transmission attenuation, a content of the first resin material in the second member is preferably 60% by mass or more, more preferably 70% by mass or more, still more preferably 80% by mass or more, and particularly preferably 90% by mass or more.

The content of the first resin material in the second member may be 100% by mass or less.

The second member may contain a resin material other than the first resin material (another resin material) as long as the properties of the layered structure in the present disclosure are not impaired.

As another resin material, the resin materials described above as the first resin material can be used.

From the viewpoint of reducing the amount of transmission attenuation, a content of the another resin material in the second member is preferably 5% by mass or less, more preferably 3% by mass or less, still more preferably 1% by mass or less, and particularly preferably 0% by mass.

The second member may contain additives such as an inorganic particle, a coloring agent, and an antistatic agent within a range that does not impair the properties of the layered structure in the present disclosure.

A relative permittivity of the second member may be from 2.5 to 3.3, from 2.5 to 2.9, or from 2.5 to 2.8.

A dielectric loss tangent of the second member is preferably 0.010 or less from the viewpoint of transmission of radio waves such as millimeter waves. The lower limit of the dielectric loss tangent is not particularly limited.

From the viewpoint of formability, a thickness of the second member is preferably from 1.5 mm to 6 mm, and more preferably from 1.8 mm to 5.5 mm.

(Filling member)

The layered structure for automobile emblem in the present disclosure includes a filling member provided between the first member and the second member.

The filling member contains a second resin material, and the second resin material is not particularly limited as long as it is a resin material which is different from the first resin material. Examples of the second resin material include a synthetic rubber, an epoxy resin, a urethane resin, a silicone resin, a modified silicone resin, a polyester, a (meth)acrylic resin, an ethylene vinyl acetate resin, a polyvinyl alcohol, a polyamide, or the like.

From the viewpoint of reducing the amount of transmission attenuation, the second resin material is preferably selected from the group consisting of a synthetic rubber, an epoxy resin, and a urethane resin.

The resin material described above tends to be particularly useful in a case in which polycarbonate is used as the first resin material.

Examples of the synthetic rubber include an ethylene-propylene-diene rubber (EPDM), an acrylonitrile-butadiene rubber (NBR), an isoprene rubber (IR), a butadiene rubber (BR), a styrene-butadiene rubber (SBR), a chloroprene rubber (CR), a silicone rubber, a urethane rubber, or the like.

Among the above, an EPDM is particularly preferable from the viewpoint of reducing the amount of transmission attenuation.

EPDM tends to be particularly useful in a case in which polycarbonate is used as the first resin material.

The epoxy resin is not particularly limited as long as it has an epoxy bond. Examples of the epoxy resin include a bisphenol A-type epoxy resin, a bisphenol F-type epoxy resin, a hydrogenated bisphenol A-type epoxy resin, a brominated bisphenol A-type epoxy resin, a bisphenol S-type epoxy resin, a phenol novolac-type epoxy resin, a cresol novolac-type epoxy resin, a bisphenol A novolac-type epoxy resin, a biphenyl-type epoxy resin, a naphthalene-type epoxy resin, a dicyclopentadiene-type epoxy resin, a triphenylmethane-type epoxy resin, a bisphenyl-phenol-type epoxy resins, a modified novolac-type epoxy resins, or the like.

From the viewpoint of reducing the amount of transmission attenuation, bisphenol A-type epoxy resin is particularly preferable among the above.

Bisphenol A-type epoxy resin tends to be particularly useful in a case in which polycarbonate is used as the first resin material.

The urethane resin is not particularly limited as long as it has a urethane bond. Examplesthereof include a reaction product of an isocyanate compound and a polyol compound (polyol-based urethane resin).

Examples of the isocyanate compound include hexamethylene diisocyanate, lysine methyl ester diisocyanate, 2,4,4-trimethylhexamethylene diisocyanate, isophorone diisocyanate (IPDI), xylylene diisocyanate, tetramethylxylylene diisocyanate, p-phenylene diisocyanate, tolylene diisocyanate (TDI) or the like.

Examples of the polyol compound include a polyether polyol, a polyester polyol, a polyether ester polyol, a polycarbonate polyol, a polyolefin polyol, a silicon polyol, a polyacrylic polyol, or the like.

From the viewpoint of reducing the amount of transmission attenuation, a content of the second resin material in the filling member is preferably 60% by mass or more, more preferably 70% by mass or more, still more preferably 80% by mass or more, and particularly preferably 90% by mass or more.

The content of the second resin material in the filling member may be 100% by mass or less.

The filling member may contain a resin material other than the second resin material (another resin material) as long as the properties of the layered structure in the present disclosure are not impaired.

As another resin material, the resin materials described above as the second resin material can be used.

From the viewpoint of reducing the amount of transmission attenuation, a content of the another resin material in the filling member is preferably 5% by mass or less, more preferably 3% by mass or less, still more preferably 1% by mass or less, and particularly preferably 0% by mass.

The filling member may contain additives such as an inorganic particle, a filler, a coloring agent, and an antistatic agent within the range that does not impair the properties of the layered structure in the present disclosure.

A relative permittivity of the filling member may be from 2.0 to 3.3, from 2.2 to 3.2, or from 2.3 to 3.0.

A dielectric loss tangent of the filling member is preferably 0.050 or less from the viewpoint of transmission of radio waves such as millimeter waves. The lower limit of the dielectric loss tangent is not particularly limited.

From the viewpoint of reducing the amount of transmission attenuation, a thickness of the filling member is preferably from 0.1 mm to 3.0 mm, and more preferably from 0.3 mm to 1.0 mm.

(Design layer)

The layered structure for automobile emblem in the present disclosure may further include a design layer between the first member and the second member, and the design layer may be further provided on at least one side between the first member and the filling member or between the second member and the filling member.

The design layer may be, for example, a metal particle layer containing a metal particle, and may be a silver particle layer containing a silver particle.

The silver particle layer may be formed by a silver mirror reaction. Moreover, the silver particle contained in the silver particle layer may include a silver particle precipitated by a silver mirror reaction (precipitated silver particles). Furthermore, the silver particle layer may exhibit a sea-island structure in which silver particles are scattered in islands.

Formation of the silver particle layer by the silver mirror reaction is carried out by placing two liquids, namely, a water-soluble silver salt aqueous solution and a reducing agent aqueous solution containing a reducing agent and a strong alkaline component, on a surface of the first member, on a surface of the second member, or on a surface of an undercoat layer described later (hereinafter, these surfaces may be collectively referred to as "silver mirror reaction treated surface") so as to be mixed thereof. This causes an oxidation-reduction reaction to generate silver particles and form a silver particle layer.

The layered structure for automobile emblem in the present disclosure may include a configuration other than the first member, the second member, the filling member, and the design layer. For example, another member may be provided at least one of the outer sides of the first member and the second member.

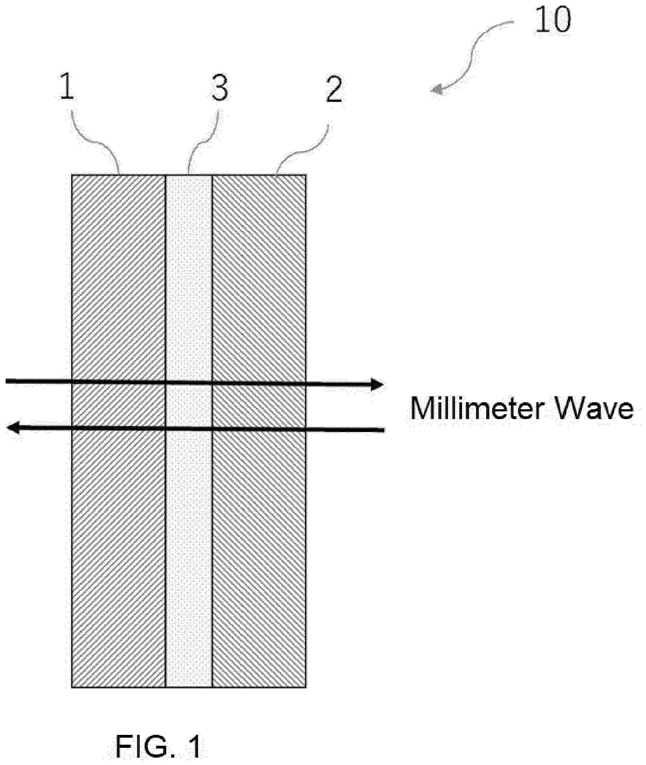

An example of the layered structure for automobile emblem in the present disclosure will be described with reference to FIG 1. As shown in FIG. 1, a layered structure 10 for an automobile emblem includes a first member 1, a second member 2, and a filling member 3 provided between the first member 1 and the second member 2. Further, millimeter waves pass through the layered structure 10 for automobile emblem as indicated by arrows in FIG 1.

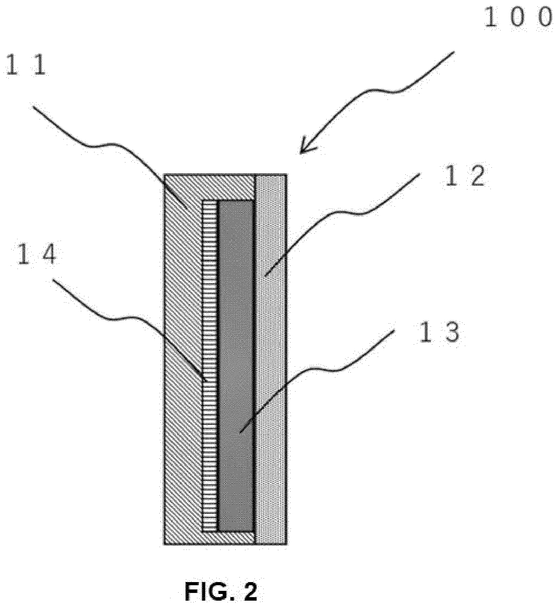

Another example of the layered structure for automobile emblem in the present disclosure will be described with reference to FIG. 2. FIG.2 is a schematic configuration diagram showing the layered structure for an automobile emblem in the present disclosure, which is applied to an emblem.

As shown in FIG. 2, a layered structure 100 for an automobile emblem includes a first member 11 provided on inside, a second member 12 provided on outside, and a filling member 13 and a design layer 14 which are provided between the first member 11 and the second member 12.

<Object detection structure>

An object detection structure in the present disclosure includes the layered structure for automobile emblem in the present disclosure described above and a millimeter wave radar that emits millimeter waves toward the layered structure for automobile emblem. Since the layered structure for automobile emblem in the present disclosure can reduce an amount of transmission attenuation of millimeter wave, the object detection structure in the present disclosure is excellent in millimeter wave radar transmission/reception performance.

Note that the layered structure for automobile emblem in the present disclosure may be combined with a radar that transmits and receives radio waves other than millimeter waves.

EXAMPLES

Examples in the present disclosure will be described below, but the present disclosure is not limited to the following examples.

<Example 1>

(Preparation of first member)

A planar polycarbonate (PC) substrate having a thickness of 2 mm (relative permittivity at 77 GHz: 2.7, dielectric loss tangent: 0.008) was prepared as the first member.

(Preparation of second member)

A planar PC substrate having a thickness of 2 mm (relative permittivity at 77 GHz: 2.7, dielectric loss tangent: 0.008) was prepared as a second member.

(Production of layered structure for automobile emblem)

Ethylene-propylene-diene rubber 1 (EPDM1, manufactured by Nitto Denko Co., Ltd., EH2200) was used as the filling member, and each member was layered in order of the first member, the planar filling member and the second member for automobile emblem to produce a layered structure.

A thickness of the filling member in the layered structure for automobile emblem was 0.4 mm.

<Example 2>

A layered structure for an automobile emblem was produced in the same manner as in Example 1, except that the filling member was changed to ethylene-propylene-diene rubber 2 (EPDM2, manufactured by INOAC Corporation, E8000).

<Example 3>

A layered structure for an automobile emblem was produced in the same manner as in Example 1, except that the filling member was changed from EPDM1 to epoxy resin (manufactured by Henkel Japan Ltd., Quick Mix, main agent: bisphenol A type epoxy resin (100% by mass), curing agent: polymercaptan (85% by mass or more) and modified amine).

<Example 4>

A layered structure for an automobile emblem was produced in the same manner as in Example 1, except that the filling member was changed from EPDM1 to an urethane resin (polyol-based urethane resin, manufactured by Sanyu Rec Co., Ltd., SZ-2390).

<Comparative Example 1>

A first member and a second member were prepared in the same manner as in Example 1, and a spacer (thickness of 0.5 mm) was provided between the first member and the second member to obtain a layered structure of Comparative Example 1. In the layered structure of Comparative Example 1, there was a gap between the first member and the second member, and air (relative permittivity 1.0) exists in this gap.

[Evaluation]

-Measurement of amount of transmission attenuation of millimeter wave-

An amount of transmission attenuation, which is an attenuation amount when a millimeter wave (77 GHz) is transmitted through the layered structures for automobile emblem obtained in each example and comparative example 1, was measured by the following method.

The amount of transmission attenuation was calculated from the transmission coefficient obtained by the free-space method in which a laminated structure for automobile emblem is placed between a transmitting antenna and a receiving antenna, and an electric wave perpendicularly irradiates to the first member side of the layered structure for automobile emblem, in compliance with JIS R1679:2007 (Measurement methods for reflectivity of electromagnetic wave absorber in millimeter wave frequency).

Here, the amount of transmission attenuation can be calculated from the following equation using the transmission coefficient.

$$\text{Amount of transmission attenuation} = 20 \log_{10} (\text{transmission coefficient})$$

The results are shown in Table 1.

[Table 1]

| | First member | Filling member | Second member | Amount of transmission attenuation (dB) |
|---|---|---|---|---|
| Example 1 | PC substrate | EPDM 1 | PC substrate | -0.83 |
| Example 2 | PC substrate | EPDM 2 | PC substrate | -0.95 |
| Example 3 | PC substrate | Epoxy resin | PC substrate | -0.72 |

(continued)

|  | First member | Filling member | Second member | Amount of transmission attenuation (dB) |
|---|---|---|---|---|
| Example 4 | PC substrate | Urethane resin | PC substrate | -1.11 |
| Comparative Example 1 | PC substrate | None (Air) | PC substrate | -3.13 |

As shown in Table 1, in the layered structures for automobile emblem of Examples 1 to 4, the attenuation amount of millimeter waves was suppressed compared to the layered structure for automobile emblem of Comparative Example 1.

The present disclosure of Japanese Patent Application No. 2021-017450 filed on February 5, 2021 incorporated herein by reference in their entirety. All documents, patent applications, and technical standards described in the present specification are incorporated herein by reference to the same extent as if each individual document, patent application, or technical standard were specifically and individually indicated to be incorporated by reference.

**Claims**

1. A layered structure for an automobile emblem, comprising:

   a first member comprising a first resin material;
   a second member comprising the first resin material and facing the first member; and
   a filling member comprising a second resin material provided between the first member and the second member.

2. The layered structure for an automobile emblem according to claim 1, wherein the first resin material is selected from the group consisting of a polycarbonate, an acrylonitrile-butadiene-styrene copolymer resin, a (meth)acrylic resin and an acrylonitrile-ethylene-propylene-diene-styrene copolymer resin.

3. The layered structure for an automobile emblem according to claim 1 or claim 2, wherein the second resin material is selected from the group consisting of a synthetic rubber, an epoxy resin and a urethane resin.

4. The layered structure for an automobile emblem according to any one of claims 1 to 3, wherein the first resin material is polycarbonate, and the second resin material is selected from the group consisting of ethylene-propylene-diene rubber, bisphenol A type epoxy resin and polyol-based urethane resin.

5. The layered structure for an automobile emblem according to any one of claims 1 to 4, wherein a thickness of the filling member is from 0.1 mm to 3.0 mm.

6. The layered structure for an automobile emblem according to any one of claims 1 to 5, wherein each content of the first resin material in the first member and in the second member is independently 60% by mass or more.

7. The layered structure for an automobile emblem according to any one of claims 1 to 6, wherein a content of the second resin material in the filling member is 60% by mass or more.

8. The layered structure for an automobile emblem according to any one of claims 1 to 7, further comprising a design layer between the first member and the filling member or between the second member and the filling member.

9. The layered structure for an automobile emblem according to any one of claims 1 to 8, wherein the first member or the second member comprises a coloring agent.

10. An object detection structure comprising:

    the layered structure for an automobile emblem according to any one of claims 1 to 9; and
    a millimeter wave radar that emits a millimeter wave toward the layered structure for an automobile emblem.

FIG. 1

FIG. 2

## INTERNATIONAL SEARCH REPORT

| International application No. |
|---|
| **PCT/JP2022/001656** |

**A.    CLASSIFICATION OF SUBJECT MATTER**

*B32B 27/00*(2006.01)i; *B32B 27/36*(2006.01)i; *B60R 13/00*(2006.01)i; *B32B 7/025*(2019.01)i
FI:    B60R13/00; B32B27/36 102; B32B7/025; B32B27/00

According to International Patent Classification (IPC) or to both national classification and IPC

**B.    FIELDS SEARCHED**

Minimum documentation searched (classification system followed by classification symbols)

B32B27/00; B32B27/36; B60R13/00; B32B7/025

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2016-141355 A (TOYODA GOSEI CO., LTD.) 08 August 2016 (2016-08-08) paragraphs [0002], [0013]-[0024], [0042], fig. 1-3 | 1-10 |
| A | JP 2019-166888 A (TOYODA GOSEI CO., LTD.) 03 October 2019 (2019-10-03) entire text, all drawings | 1-10 |
| A | JP 2009-120122 A (TOYODA GOSEI CO., LTD.) 04 June 2009 (2009-06-04) entire text, all drawings | 1-10 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2016-141355 | A | 08 August 2016 | (Family: none) | | | |
| JP | 2019-166888 | A | 03 October 2019 | US entire text, all drawings WO CN | 2021/0155168 2019/065165 111133328 | A1 A1 A | |
| JP | 2009-120122 | A | 04 June 2009 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003019765 A
- JP 2021017450 A